(19) Europäisches Patentamt
European Patent Office
Office européen des brevets

(11) **EP 3 961 325 A1**

(12) **EUROPÄISCHE PATENTANMELDUNG**

(43) Veröffentlichungstag:
**02.03.2022 Patentblatt 2022/09**

(21) Anmeldenummer: **20193024.5**

(22) Anmeldetag: **27.08.2020**

(51) Internationale Patentklassifikation (IPC):
**G05B 19/418** (2006.01)    **G06N 3/08** (2006.01)

(52) Gemeinsame Patentklassifikation (CPC):
**G05B 19/41875; G06N 3/08;** G05B 2219/32177

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Büttner, Florian**
**81541 München (DE)**
• **Frank, Johannes**
**81673 München (DE)**
• **Soler Garrido, Josep**
**81547 München (DE)**

(54) **QUALITÄTSINSPEKTIONSVERFAHREN UND QUALITÄTSINSPEKTIONSANORDNUNG FÜR DIE PRODUKTION EINES OBJEKTES**

(57)    Die Erfindung betrifft ein Qualitätsinspektionsverfahren für die Produktion eines Objektes, insbesondere im industriellen Umfeld, bei dem die Produktion des Objektes zumindest auf Grundlage eines mit einem durch zeitlich vorhergehend durchgeführtem maschinellen Training mit einer Unsicherheit vorkalibrierten Modells durchgeführt wird. Die Erfindung betrifft auch eine Qualitätsinspektionsanordnung mit Mitteln zur Durchführung des Verfahrens

**EP 3 961 325 A1**

FIG 2

Training    Betrieb

Label-Vergabe an Beispiele ohne Label — TS1

Generierung gestörter Proben — TS2

Training des Modells mit erweiteter Datenbank — TS3

Modell testen und validieren — TS4

Bereitstellug aktuelles Modell im Gerät für den Betrieb — TS5

Triggerung eines Qualitätsereignisses — BS1

Führe aktuelles Modell auf dem Gerät aus — BS2

Geringe Sicherheit ? — BS3    Nein

Ende — BS5    Ja

Bediener-rückmeldung erforderlich und verfügbar ? — BS4    Nein    Ja

Visualisierung des Ergebnisses und Rückmeldungserfassung — BS6

Füge Beispiel zum Datensatz hinzu — BS7

## Beschreibung

Die Erfindung betrifft ein Qualitätsinspektionsverfahren für die Produktion eines Objektes gemäß dem Gattungsbegriff des Anspruchs 1 sowie ein Qualitätsinspektionsanordnung für die Produktion eines Objektes gemäß dem Oberbegriff des Anspruchs 14.

Systeme zur Inspektion von Qualität im industriellen Umfeld sind bekannt. Industrielle Qualitätsinspektionssysteme, die auf maschinellem Lernen basieren, erfreuen sich dabei zunehmender Beliebtheit. Dies ist durch Potenzial neuronaler Netze zur Bewertung der Produktqualität oder zur Erkennung und sogar Vorhersage von Fehlern mit sehr hoher Präzision begründet, die beispielsweise auf der Grundlage von Sensordaten oder visuellen Daten von Industriekameras erzielt werden.

Dabei ergänzen diese Qualitätsinspektionssysteme zurzeit die bestehende Infrastruktur von Industrieprodukten. Es wird jedoch angestrebt, die Industrieprodukte mit Funktionen auszustatten, die auf neuronalen Netzen basieren und direkt auf den Geräten selbst implementiert werden.

Ein Problem dabei ist, dass maschinelle Lernlösungen für die Qualitätsprüfung typischerweise sehr fragile Klassifizierungsergebnisse bringen, vor allem zu Beginn des Einsatzes, da sie zunächst mit sehr wenigen verfügbaren Beispielen ausgebildet werden und in einem sehr dynamischen Umfeld operieren. Sie werden daher oft mit Situationen konfrontiert, die sie während des Trainings noch nie gesehen haben, was häufiger zu fehlerhaften Klassifizierungen führt.

Je nach der spezifischen Aufgabe, die das Modell des maschinellen Lernens erfüllt, können diese Klassifizierungsfehler große negative Auswirkungen haben. Beispielsweise können sie die Herstellung ganzer Chargen fehlerhafter Teile oder sogar Anlagenschäden zur Folge haben.

Auf maschinellem Lernen basierende Qualitätsinspektions- oder Fehlerprognosesysteme stecken somit derzeit noch in den Kinderschuhen, und wie bereits beschrieben, sind sie von Natur aus fragil.

Konventionelle Wege wie diese Situation derzeit angegangen wird, sind das Erstellen sehr großer Datensätze von Anfang an sowie das Hinzufügen von Redundanz.

Durch das Erstellen sehr großer Datensätze wird das Risiko verringert, dass Systeme zu Beginn ihres Betriebes fehlerhafte Ergebnisse liefern. Dies hat jedoch einen enormen manuellen Vorlaufaufwand zur Folge, nämlich die Erstellung sehr vieler Beispiele, bevor ein funktionierendes System produziert wird. In einigen Fällen wird dies sogar eine unmögliche Aufgabe, da selbst erfahrene Automatisierungstechniker nicht alle Szenarien, auf die das System im Betrieb stoßen wird, im Voraus vorhersehen können.

Für das Hinzufügen von Redundanz wird zur Risikominderung ein Backup-System vorgesehen, das als Sicherheitsnetz für die Fälle dient, in denen das Modell des maschinellen Lernens versagt. Dies könnte beispielsweise sein, zusätzliche Qualitätsprüfungen auf Grundlage klassischer Methoden bereitzustellen, falls verfügbar. In der Regel erfordern diese jedoch zusätzliche Sensorvorrichtungen oder sogar menschliche Überwachung, was die Kosten erhöht und die Vorteile des Modells des maschinellen Lernens zunichtemacht. Eine ähnliche Alternative könnte eine dedizierte, auf maschinellem Lernen basierende Lösung sein, beispielsweise ein Autoencoder, die sich der Unterscheidung zwischen bekannten und unbekannten Szenarien widmet. Dies erhöht aber wiederrum auch die Kosten für Technik und Hardware und kann in der Praxis unter den gleichen Einschränkungen leiden, wie das erste maschinelle Modell. Das heißt das Modell macht übertriebene Vorhersagen (Klassifizierungsfehler) in Situationen, in denen es dem Modell von Natur aus nicht möglich ist, Vorhersagen mit einer hohen Vorhersagekraft zu machen.

Die der Erfindung zugrundeliegende Aufgabe ist es daher, eine Lösung anzugeben, die die Nachteile des Standes der Technik überwindet.

Die Aufgabe wird erfindungsgemäß durch das Qualitätsinspektionsverfahren gemäß Gattungsbegriff des Anspruchs 1 durch dessen Merkmale gelöst, sowie durch die Qualitätsinspektionsanordnung gemäß dem Oberbegriff des Anspruchs 14, durch dessen kennzeichnende Merkmale gelöst.

Bei dem erfindungsgemäßen Qualitätsinspektionsverfahren für die Produktion eines Objektes, insbesondere im industriellen Umfeld, wird die Produktion des Objektes zumindest auf Grundlage eines mit einem durch zeitlich vorhergehend durchgeführtem maschinellen Training mit einer Unsicherheit vorkalibrierten Modells durchgeführt.

Durch die erfindungsgemäße Vorgehensweise der Vorkalibrierung der Unsicherheit eines Modells und das damit durchgeführte Training ist es möglich bereits bei Inbetriebnahme der Produktion Objekte zu inspizieren ohne dass ein Training am Ort der Produktion und/oder umfangreiche Lernphase im Vorfeld zur Sicherstellung, dass das Modell weitestgehend mit allen Fehlern trainiert worden ist, stattgefunden hat.

Die erfindungsgemäße Qualitätsinspektionsanordnung zeichnet sich dadurch aus, dass es Mittel zur Durchführung des Verfahrens einer seiner Ausgestaltungen und Weiterbildungen umfasst.

Hierdurch trägt er zur Implementierung und mutatis mutandis damit Realisierung der im Zusammenhang mit dem Verfahren genannten Vorteile bei.

Weitere vorteilhafte Ausgestaltungen und Weiterbildungen der Erfindung sind durch die Unteransprüche angegeben.

Die in Bezug auf das Qualitätsinspektionsverfahren nachstehend angeführten Vorteile und bevorzugten Ausgestaltungen lassen sich dabei sinngemäß auf die erfindungsgemäße Qualitätsinspektionsanordnung und seine sich mit den Ausgestaltungen des Verfahrens ergebenden bevorzugten Ausgestaltungen übertragen.

Vorzugsweise wird das erfindungsgemäße Verfahren derart weitergebildet, dass für die Produktion des Objektes, insbesondere im industriellen Umfeld,

a. ein, insbesondere industrielles, Feldgerät, wie beispielsweise eine Kamera, derart betrieben, dass es mindestens einen auf Grundlage von Algorithmen des maschinellen Lernens durchgeführten Prozess umsetzt wird,

b. eine zumindest mit dem Feldgerät derart funktional verbundene Steuereinrichtung betrieben, die abhängig von dem Prozess mindestens ein Steuersignal für zumindest eine Steuerung des Feldgeräts und/oder funktional mit ihm verbundenen Systemen erzeugt wird,

c. ein zumindest mit dem Feldgerät derart funktional verbundenes System, insbesondere Computersystem, zur Ausführung von einem maschinellen Training betrieben wird, dass erste Daten vom System für den Prozess und/oder zweite Daten des Prozesses für das System übertragbar sind, wobei die ersten Daten aufgrund mindestens einem zeitlich vor erstmaliger Inbetriebnahme des Feldgeräts durchgeführten maschinellen Training derart mit einer Unsicherheit vorkalibriert werden, dass sie hinsichtlich ihres Modells des maschinellen Lernens, zumindest mit generierten gestörten Proben validiert und getestet sind,

d. die ersten Daten vor erstmaliger Inbetriebnahme an das Feldgerät übertragen werden,

e. nach erstmaliger Inbetriebnahme je produziertem Objekt ein Zustand eines produzierten Objekts durch die Kamera erfasst wird und bei Auftreten eines Qualitätsereignisses erfolgt ein Klassifizierungsversuch zur Klassifizierung der Qualität aufgrund des durch die ersten Daten vorkalibrierten Models,

f. bei einem Fehlschlag des Klassifizierungsversuchs die Daten zum aktuellen Objekt als zweite Daten hinterlegt werden,

g. bei einem Fehlschlag, eine Prozedur zur Abwicklung des Fehlschlags, insbesondere eine Prozedur zur Vergabe einer neuen Klassifikation für den durch die Kamera erfassten Zustand des Objekts durchgeführt wird,

h. bei folgenden Qualitätsereignissen, der Klassifizierungsversuch auf Grundlage der zweiten Daten aktualisierten kalibrierten Models erfolgt.

Durch die gemäß dieser Weiterbildung sich ergebende Ausgestaltung des erfindungsgemäßen Verfahrens ist eine Implementierung gegeben, bei der durch die Kamera und die funktional verbundenen Einheiten bereits auf maschinellem Lernen basierende Qualitätsinspektionen am Ort der Produktion, also beispielsweise einem separaten angeordneten, mit der Kamera lösbar verbundenen oder die Kamera integrierenden Feldgerät, dass die Objekte produziert implementiert werden. Dies ermöglich wie bereits angegeben unter anderem die Vorkalibrierung der Unsicherheit eines Modells und das damit durchgeführte Training. Dadurch ist bereits bei Inbetriebnahme am Ort der Produktion eine Unterstützung eines Bedieners bei der Qualitätsinspektion möglich, wobei die Ausgestaltung der Erfindung es unter anderem erreicht, dass in dem im Fehlerfall eine entsprechende Prozedur einleitet wird. Diese Weiterbildung des erfindungsgemäßen Verfahrens ermöglicht dabei durch Sammlung von Daten während der Produktion bzw. der Qualitätsinspektion eine Aktualisierung der Kalibrierung und des Modells, welches ursprünglich als erste Daten übertragen worden war, so dass sich die Inspektion im Betrieb immer weiter optimiert.

Bei einer Ausgestaltung des erfindungsgemäßen Verfahrens wird ein Fehlschlag derart ermittelt, dass gemäß Klassifizierungsprozeduren, wie beispielsweise dem so genannten "Predictive Entropy Across Classes", zumindest eine mit der Zuverlässigkeit der Klassifizierung korrelierender Wert ermittelt wird, bei Unterschreiten des Schwellwerts eine Einstufung als "Fehlschlag" erfolgt. Mit derartigen Klassifizierungsprozeduren, insbesondere dem Predictive Entropy Across Classes, können höhere Unsicherheiten bei der Klassifikation bestimmt und einer Einstufung zugeführt werden. Gemeinsam mit einem geeignet eingestellten Schwellwert wird die Genauigkeit der Bestimmung dadurch verbessert.

Vorzugsweise wird das erfindungsgemäße Verfahren derart weitergebildet, dass das vorkalibrierte Modell und/oder das aktualisierte kalibrierte Modell zumindest teilweise auf Grundlage der so genannten "Platt Scaling" und/oder "Temperature Scaling" erzeugt wird. Hierdurch sind Ansätze zur Verbesserung gegeben.

Unterstützt wird diese Verbesserung, wenn alternativ oder ergänzend das erfindungsgemäße Verfahren derart weitergebildet wird, dass die Generierung gestörter Proben zumindest teilweise auf Grundlage des so genannten "Fast Gradient Sign Method" durchgeführt wird. Der vorteilhafte Beitrag besteht insbesondere darin, das gestörte Proben auf Basis der Trainingsdaten generiert werden können, welche das Modell vor Allem beim Training vor einer Inbetriebnahme, also domänenfern, aber auch im Betrieb, also domänenintern, die Vorhersagekraft des Systems steigern.

Wird das erfindungsgemäßen des Weiteren so ausgestaltet, dass das bei dem erfindungsgemäßen Verfahren die Prozedur für die Vergabe einer neuen Klassifikation derart erfolgt, dass ein Betreiber der Maschine zur Eingabe einer Klassifikation aufgefordert wird, die Hinterlegung als zweite Daten zumindest auf Grundlage der eingegebenen Klassifikation erfolgt, wird eine Feedbackmöglichkeit durch Menschen geschaffen, die das Produkt vor Ort in Augenschein nehmen und den gemeldeten Fehler klassifizieren können. Die Hinterlegung dieser Daten kann dann domänenintern aber auch domänenfern zur Optimierung des Modells genutzt werden.

Alternativ oder ergänzend kann das erfindungsgemäße Verfahren derart weitergebildet werden, dass die Prozedur für die Vergabe einer neuen Klassifikation derart erfolgt, dass eine Verbindung zu einer, insbesondere cloudbasierten, Datenbasis mit dort hinterlegten zweiten Daten, betreibbar ist, für den erfassten Zustand des Objekts automatisiert nach einem einen übereinstimmenden und/oder zumindest einem ähnlichen erfassten Zustand des Objekts gesucht wird, der übereinstimmende und/oder mindestens ein Zustand hoher Ähnlichkeit ermittelt wird und eine Festlegung der Klassifikation auf Grundlage der Ermittlung erfolgt. Mit dieser Weiterbildung kann die Inspektion von verteilten Qualitätsinspektion bzw. deren Ergebnissen und Trainings im Betrieb profitieren, da diese in einer Datenbasis hinterlegt sein können. Wenn sich diese Datenbasis in einer Cloud befindet, kann die Datenbasis quasi in Echtzeit aktualisiert werden bzw. die Inspektion gemäß Erfindung kann auf den neuesten Stand des Modells zugreifen und so eine möglichst akkurate Einschätzung eines möglichen Fehlers gewährleisten.

Vor allem beim domäneninternen Training des Modells wird die Weiterbildung des erfindungsgemäßen Verfahrens derart, dass die Festlegung derart erfolgt, dass dem Betreiber des Feldgeräts das Ermittlungsergebnis präsentiert wird, eine Aufforderung zur Bestätigung des übereinstimmenden Ergebnisses und/oder Auswahl eines aus mehreren Zuständen, die Klassifikation für diesen Zustand vergeben wird, zugutekommen.

Alternativ oder ergänzend ist es denkbar das Verfahren gemäß Erfindung derart weiterzubilden, dass die Festlegung derart erfolgt, dass automatisiert, insbesondere gestützt durch gemäß maschinellem Lernen trainierten Model für die Festlegung aufgrund einer Auswahl von zweiten Daten, eine Bestätigung des übereinstimmenden Ergebnisses und/oder Auswahl eines aus mehreren Zuständen derart erfolgt, dass die Klassifikation für diesen Zustand vergeben wird. Hierdurch wird quasi der Bediener/Betreiber durch ein auf maschinellem Lernen basierenden System bei der Klassifizierung ersetzt.

Gemäß einer weiteren Ausgestaltung wird das erfindungsgemäße Verfahren derart weitergebildet, dass die zweiten Daten für ein aktualisiertes Training des Prozesses auf dem System verwendet werden. Damit wird eine unabhängige domäneninterne Aktualisierung ermöglicht.

Das Verfahren kann aber auch derart weitergebildet werden, dass eine Ausgestaltung vorliegt, dass zumindest die ersten Daten des aktualisierten Trainings, insbesondere zumindest als Teil eines aktualisierten kalibrierten Models, an das Feldgerät übertragen werden. Damit wird die Inspektion durch domänenfernes Training unterstützt.

Vorteilhafter Weise wird dazu das Verfahren gemäß Erfindung derart weitergebildet, dass eine Ausgestaltung vorliegt, bei der die Übertragung zumindest teilweise durch Anbindung an ein, insbesondere zur Datenübertragung betriebenes Netzwerk, durchgeführt wird. Hierdurch kann jederzeit eine Aktualisierung von Daten in der Domäne oder aus der Domäne heraus durchgeführt werden.

Alternativ oder ergänzend kann das erfindungsgemäße Verfahren auch derart weitergebildet werden, dass die Übertragung zumindest teilweise auf Grundlage von Wechselspeichermitteln, SD Karten, USB-Sticks und Vergleichbarem, durchgeführt wird. Hierdurch hat man im Falle einer bereits bestehenden Verbindung mit einem Netzwerk eine Alternative bei etwaigen Störungen des Netzes. Dies kann aber auch in einem System, das ohne Anbindung an ein Netz auskommen muss oder soll, von Vorteil sein.

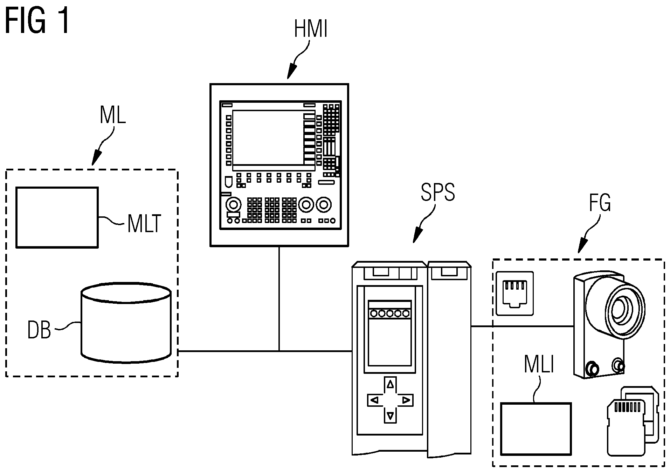

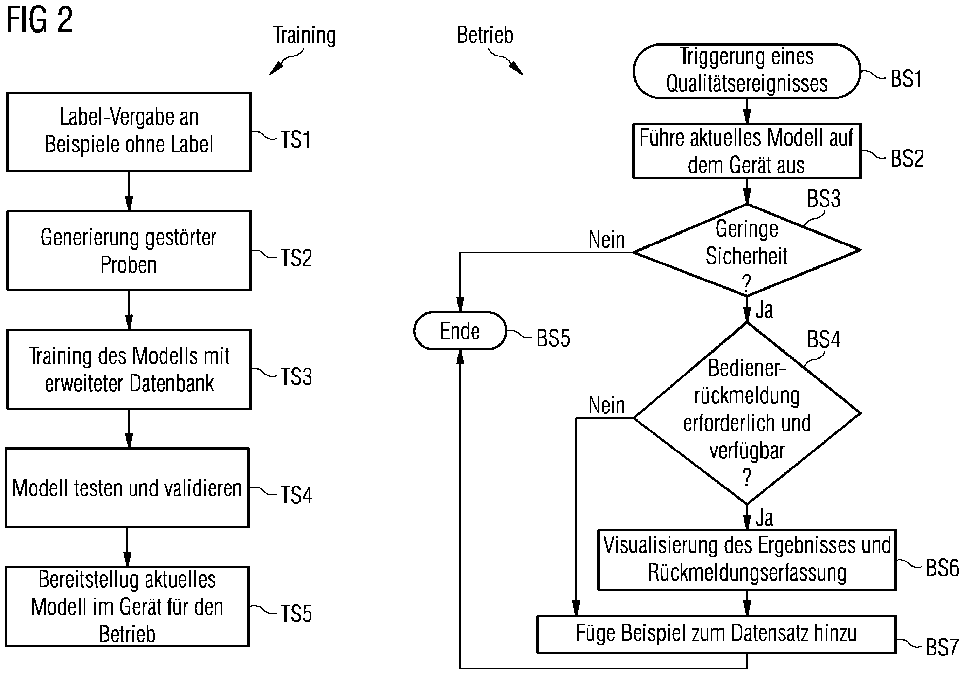

Weitere Vorteile und Details der Erfindung werden anhand der in den FIGUR 1 und FIGUR 2 dargestellten Ausführungsbeispiele der Erfindung erläutert. Dabei zeigt

FIGUR 1 schematisch ein Ausführungsbeispiel der erfindungsgemäßen Anordnung,

FIGUR 2 schematisch ein Ablaufdiagramm eines Ausführungsbeispiels des erfindungsgemäßen Verfahrens.

In der FIGUR 1 ist schematisch eine Anordnung eines Ausführungsbeispiels der erfindungsgemäßen Anordnung dargestellt. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Bei der in FIGUR 1 dargestellten Anordnung ist zu erkennen, dass gemäß Ausführungsbeispiel ein zu einem im Sinne der Erfindung zum Zusammenwirken verbundenen Einrichtungen, ein System S gebildet wird.

Dieses System S besteht dabei aus einem Feldgerät FG wie beispielsweise einem, insbesondere industriellen Kameragerät, welches zur Erfüllung seines Beitrags gemäß Ausführungsbeispiel zur erfindungsgemäßen Lösung, derart ausgestaltet ist, dass es in der Lage ist, zuvor gelernte maschinelle Lernalgorithmen auszuführen, beispielsweise ein MV540-Lesegerät, also ein Inferenzsystem zum maschinellen Lernen MLI aufweist. Alternativ oder ergänzend ist zu diesem Zweck einem Hardware-Subsystem verbunden, das dazu in der Lage ist, wie beispielsweise eine S7-1500 TM-NPU.

Ferner ist es gemäß Ausführungsbeispiel in der Lage, Schulungsbeispiele für maschinelles Lernen lokal über eine SD-Karte zu speichern und somit eine entsprechende Schnittstelle aufweist, die in der Darstellung als SD Karte schematisch angedeutet wird, und/oder sie über eine Netzwerkschnittstelle, welche schematisch als LAN Schnittstelle dargestellt ist, an ein Ausbildungs-Subsystem ML weiterzugeben. Die Kommunikation kann dabei über die genannten Schnittstellen auch jeweils für Datenübertragung zum Feldgerät FG erfolgen.

Ferner enthält das Feldgerät FG gemäß Ausführungsbeispiel optional einen Webserver, welcher typischerweise für die Gerätekonfiguration vorgesehen ist, der gemäß Ausführungsbeispiel der Erfindung aber alternativ oder ergänzend hierzu zum Abrufen lokal gespeicherter Schulungsbeispiele verwendet wird.

Das Ausführungsbeispiel der Erfindung enthält wie in der Darstellung schematisch angedeutet auch eine mit dem Feldgerät funktional verbundene speicherprogrammierbare Steuerung SPS, die den jeweiligen industriellen Prozess steuert, also beispielsweise einen Herstellungsprozess, der durch das maschinelle Lernsystem MLI überwacht wird.

Zum Ausführungsbeispiel einer erfindungsgemäßen Anordnung gehört des Weiteren das Ausbildungs-Subsystem, welches als ein maschinelles Lernsystem ML ausgebildet ist, in dem ein maschinelles Lernmodell anhand von Beispielen trainiert wird und welches mit der speicherprogrammierbaren Steuerung SPS funktional verbunden ist. Es weist, wie zu erkennen ist, zumindest einen funktionalen Block für das maschinelle Lernen MLT sowie eine Datenbasis DB auf, die die Speicherung der hierfür anfallenden und/oder notwendigen Daten, wie Lernbeispiele ermöglicht.

Eine Kommunikation zwischen dem Ausbildungssystem ML und den anderen Elementen des Systems S ist dabei gemäß Ausführungsbeispiel möglich, entweder weil sie Teil des gleichen industriellen Kommunikationsnetzes ist wie in der FIGUR schematisch angedeutet oder weil sie über ein industrielles Kommunikations-Backbone, das das Industrienetz (OT) zu einem externen IT Netzwerk, das das Ausbildungssystem für maschinelles Lernen hostet.

Über die genannten Kommunikationsverbindungen kann gemäß Ausführungsbeispiel optional eine Mensch-Maschine-Schnittstelle HMI vorgesehen sein, bei der ein Bediener des industriellen Automatisierungssystems ein Feedback von der Industriekamera erhalten kann.

Die Mensch-Maschine-Schnittstelle HMI kann dabei als ein Hardware-Panel ausgestaltet sein, das im Feld platziert oder als Webseite zur Verfügung gestellt wird, die eine Webanwendung aufweist, die auf einem Webserver gehostet wird und von jedem Browser angezeigt werden kann, beispielweise auch auf Browsern von mobilen Geräten wie eines Mobiltelefons oder eines Tablets.

Mit der letztgenannten Option ist es möglich, nicht nur von den Betreibern vor Ort, sondern auch von Experten aus der Ferne Feedback zu erhalten.

Die Erfindung und damit auch das Ausführungsbeispiel der erfindungsgemäßen Anordnung S, leistet einen Beitrag dazu, dass eine einzige auf maschinellem Lernen basierende Lösung mit gut kalibrierter Unsicherheit erreicht wird, die den Besitzer zusätzlich aktiv dabei unterstützt, seine Leistung im Laufe der Zeit durch aktives Lernen zu verbessern.

Dieser erfindungsgemäße Ansatz ermöglicht es, industrielle maschinelle Lernsysteme zunächst mit weniger Daten, ohne die Risiken herkömmlicher Ansätze zu trainieren, wodurch die Eintrittsbarriere zu intelligenten industriellen Systemen für Fehlerprognose, Diagnose, Qualitätsprüfung usw. gesenkt wird.

Ausgehend von einem in der FIGUR 2 dargestellten Ausführungsbeispiel des erfindungsgemäßen Verfahrens, sollen weitere Erläuterungen und Details der Erfindung angegeben werden, die Einsicht darin geben, wie die erfindungsgemäße Lösung bewirkt wird.

In FIGUR 2 ist schematisch ein Ablaufdiagramm eines Ausführungsbeispiels des erfindungsgemäßen Verfahrens dargestellt.

Dabei ist gemäß Ausführungsbeispiel der Ablauf eines Trainingsblocks TRAINING sowie eines Blocks im Betrieb des Systems, also im Einsatz im industriellen Umfeld, BETRIEB.

Der Trainingsblock TRAINING beginnt dabei mit einem ersten Trainingsschritt TS1 mit der Vergabe von Labeln (Klassifizierung) an Beispielen, denen noch kein Label vergeben worden ist, also neuen Beispielen.

Diesem Schritt folgt in einem zweiten Trainingsschritt TS2 die Generierung gestörter Proben, also weiterer Beispiele.

Aufgrund der u.a. mit diesen Proben erweiterten Datenbank wird dann in einem dritten Trainingsschritt TS3 ein Training des Modells durchgeführt.

Dem Training folgt dann in einem vierten Trainingsschritt TS4 ein Testen des Modells mit den Proben und ein Validieren.

Nach erfolgtem Testen und Validieren kann dann ein aktualisiertes Modell dem System S für die Nutzung im Betrieb BETRIEB bereitgestellt werden.

Die Ausführungsbeispiele führen zu einem Ausbildungssystem ML, das maschinelle Lernmodelle mit gut kalibrierter Unsicherheit erzeugt.

Weitere Details des Ausbildungssystems ML gemäß Ausführungsbeispiel und des Verfahrens gemäß Ausführungsbeispiel sowie Vorteile und Alternativen werden im Folgenden erläutert.

Bei dem Ausbildungssystem ML erfolgt eine Schulung eines technisch robusten neuronalen Netzes durch Förderung gut kalibrierter Vorhersagen für bekannte und unbekannte Proben als Teil des Trainingsprozesses TRAINING.

Dies kann auf effiziente Weise erreicht werden, indem die aus der Praxis des maschinellen Lernens bekannte Verlustfunktion so angepasst wird, dass solche gut kalibrierten Vorhersagen ermöglicht werden.

Insbesondere, kann eine kalibrationsfördernde Verlustfunktion aus zwei optionalen Subfunktionen bestehen. Erstens, eine Verlustfunktion, die hohe Entropie, beispielsweise durch Verteilung der Wahrscheinlichkeitsmasse (ausgenommen nicht irreführende Beweise) auch zwischen den Klassen einer Klassifikationsaufgabe ermöglicht.

Zweitens, eine Verlustfunktion, die explizit die Kalibrierung fördert, beispielsweise durch Minimierung des zu erwartenden Kalibrierungsfehlers einer Reihe von gestörten, beispielsweise kontradiktorische, Trainingsproben.

Diese beiden Verlustfunktionen können dann in dem Ausbildungssystem ML gemäß Ausführungsbeispiel des erfindungsgemäßen Verfahrens dann gemeinsam zusammen mit einem Klassifikations- oder Regressionsverlust optimiert werden.

Eine Ausgestaltung des erfindungsgemäßen Prozesses soll beispielhaft und vereinfacht durch folgenden Algorithmus dargestellt werden. Zur Erläuterung ist beispielhaft ein Satz von Störeinflüssen ε = {0; 0,05; 0,1; 0,15; 0,2; 0,25; 0,3; 0,35; 0,4; 0,45} sowie ein so genannter "minibatch" MB, also eine Unterteilung in "Substapel" der Anzahl b des vorhandenen Satzes an Datenpunkten und ein Trainingssatz (X; Y) gegeben. Dann wäre der beispielhafte Algorithmus in einem in der Softwareentwicklung üblicher Weise in Englisch formulierten üblichen Pseudocode wie folgt:

```
1: repeat
2: Read minibatch MB = ({X₁;...;X_b}; {Y₁;...; Y_b})
3: Randomly sample ∈MB from ε
4: Generate FGSM minibatch MB_adv of size b from
   samples in MB using ∈MB
5: Compute L_CCE and L_S and do one training step
   using minibatch MB
6: Compute predictions for all samples in MB and
   partition into M equally spaced bins
7: Compute binned accuracy acc(B_mi) for all samples
   i in MB_adv
8: Compute L_adv based on MB_adv and do one training
   step using MBadv
9: until training converged
```

Mit

$\varepsilon$ := {0, 0.05, 0.1, 0.15, 0.2, 0.25, 0.3, 0.35, 0.4, 0.45}

MB := minibatch ({$X_1$;...;$X_b$}; {$Y_1$;...; $Y_b$})

b := Größe des minibatch

X := Eingabe (input)

Y := Ausagbe (targe)

∈MB := Zufällige Proben von ε

$L_{CCE}$ := Kreuzentropie-Verlust, wobei die Kreuzentropie in der Informationstheorie und der mathematischen Statistik ein Maß für die Qualität eines Modells für eine Wahrscheinlichkeitsverteilung darstellt

$L_S$ := Entropie-Verlust, wobei die Entropie ein Maß für die Informationsdichte, den Informationsgehalt eines Zeichensystems darstellt

$B_{mi}$ := Satz von Indizes von Proben, die in Klasse mi fallen.$MB_{adv}$ := FGSM-minibatch der Größe b von Proben in

MB auf Basis ∈MB

$L_{adv}$ := kontradiktorischer Verlust (adversarial Loss), wobei der kontradiktorische Verlust in der Regel durch ein kontinuierlich geschultes Diskriminatornetz definiert ist und sich um einen binären Klassifikator handelt, der zwischen Grundwahrheitsdaten und generierten Daten unterscheidet, die durch das generative Netzwerk vorhergesagt werden, beim erfindungsgemäßen Beispiel wäre dies mit

$$L_{\mathrm{adv}} \quad = \quad \sqrt{\sum_{i=1}^{n} \left(\mathrm{acc}(B_{m_i}) - \mathrm{conf}(i)\right)^2}$$

und

acc(B_mi):= Akkuratheit (accuracy) aller Proben Bmi

conf(i):= Sicherheit/Zuverlässigkeit der Probe i

definiert.

In einer durch mit Zeile 1: und Zeile 9: definierten Schleife, die so lange durchlaufen wird, bis das Training konvergiert, werden die Zeilen 2 bis 8: wiederholt.

Beginnend in Zeile 2: in der der aktuelle Trainingssatz X und Y aus dem Substapel MB ausgelesen wird, erfolgt also in der Zeile 3: ein Erzeugen einer Zufallsprobe ∈**MB** aus dem Satz von Störungseinflüssen ε.

Anschließend wird in Zeile 4: Kalibrierungsverlust durch Minimierung von Fehlkalibrierungen für Proben, die mit der so genannten "Fast Gradient Sign Method" (FGSM) erzeugt wurden (siehe Ian J Goodfellow, Jonathon Shlens, and Christian Szegedy. "Explaining and harnessing adversarial examples". In arXiv preprint arXiv:1412.6572, 2014, dessen Inhalt, insbesondere die Definitionen, hiermit per Referenz inkludiert sind.), aus dem oben definierten Wertebereich (Der Störeinflüsse) für ∈**MB** von 0 bis 0,5 generiert.

Dem folgt in Zeile 5: eine Berechnung der Verluste $L_{CCE}$ und $L_S$ und die Durchführung eines Trainingsschritts unter Nutzung des Ministapels MB.

In Zeile 6: erfolgt dann eine Berechnung von Vorhersagen für alle Proben MB, die darauffolgend in M Klassen, wie sie in der Häufigkeitsverteilung, beispielsweise gemäß https://de.wikipedia.org/w/index.php?title=Histogramm&ol-did=197713210, definiert sind, mit gleichen Abständen aufgeteilt wird.

In Zeile 7: wird daraufhin für all diese nun kontradiktorischen Bereiche $MB_{adv}$ die Genauigkeit acc($B_{mi}$) für alle Proben i berechnet.

Schließlich wird in Zeile 8: der kontradiktorische Verlust $L_{adv}$ basierend auf den kontradiktorischen Bereichen $MB_{adv}$ berechnet und ein Trainingsschritt unter Nutzung der kontradiktorischen Daten durchgeführt.

Alternativ oder ergänzend kann ein Nachbearbeitungsschritt durchgeführt werden, bei dem die Ausgaben eines trainierten Modells werden zur Verbesserung der Kalibrierung neuskaliert. Eine Neuskalierung kann dabei unter Verwendung des so genannten "Platt Scaling" (Platt Skalierung) oder verwandter Varianten wie dem so genannten "Temperatur "Scaling"(Temperaturskalierung) durchgeführt werden.

Unter Platt Scaling (siehe Platt, John et al. "Probabilistic outputs for support vector machines and comparisons to regularized likelihood methods". "Advances in large margin classifiers", 10(3): 61-74, 1999, dessen Inhalt, insbesondere die Definitionen, hiermit per Referenz inkludiert sind.) ist im Gegensatz zu anderen bekannten Kalibrierungsansätzen ein parametrischer Ansatz zur Kalibrierung, bei dem die nicht-probabilistischen Vorhersagen eines Klassifikators als Merkmale für ein logistisches Regressionsmodell verwendet werden, das auf einem Validierungssatz trainiert wird, um als Ergebnis Wahrscheinlichkeiten zurückzugeben.

Im Zusammenhang mit neuronalen Netzen (vgl. Niculescu-Mizil, Alexandru and Caruana, Rich. "Predicting good probabilities with supervised learning". In ICML, pp. 625-632, 2005, dessen Inhalt, insbesondere die Definitionen, hiermit per Referenz inkludiert sind.) konkretisiert und beispielhaft erklärt lernt Platt-Skalierung skalare

Parameter a, $b \in \mathbb{R}$ und gibt $\hat{q}_i = \sigma(az_i + b)$ als kalibrierte Wahrscheinlichkeit aus. Die Parameter a und b können unter Verwendung des so genannten "Negative Log Likelyhood, NLL-Loss"-, also NLL-Verlusts über den Validierungssatz optimiert werden. Es ist wichtig zu beachten, dass die Parameter des neuronalen Netzes während dieser Phase festgelegt sind. Dabei ist

a:= skalarer Parameter
b:= skalarer Parameter
i:= Probenindex
z:= Logitvektor (auch logitvektor oder logit-Vektor), beispielsweise wie unter https://en.wikipedia.org/w/index.php?title=Logit&oldid=973165303 definiert
σ:= so genannte "softmax function" (Softmax, SM Funktion), also eine normalisierte Exponentialfunktion, wie sie beispielsweise in https://de.wikipedia.org/w/index.php?title=Softmax-Funk-tion&oldid=197379963 definiert ist.

Bei der Temperaturskalierung handelt es sich um die einfachste Erweiterung der Platt-Skalierung, welche beispielhaft erklärt einen einzigen skalaren Parameter T > 0 für alle Klassen verwendet. Unter Annahme eines gegebenen Logitvektors $z_i$ lautet dann eine "Vertrauensvorhersage"

$$\hat{q}_i = \max_k \left( \sigma_{SM}(z_i/T)^{(k)} \right)$$

Dabei ist

T:= Temperatur

Zi:= logitvektor
Max k:= maximum über k
K:= Klasse

Mit T ist die Temperatur, welche gewissermaßen die Softmax SM Funktion aufweicht. Das heißt es wird die Ausgangsentropie erhöht, also T > 1.

Wenn T gegen Unendlich geht, nähert die Wahrscheinlichkeit $\hat{q}_i$ sich 1/K, was eine maximale Unsicherheit darstellt. Mit T = 1 erhält man die ursprüngliche Wahrscheinlichkeit $\hat{p}_i$, also die ursprüngliche Konfidenz des so genannten Classifiers, also der Klassifizierung. Geht T gegen 0 kollabiert die Wahrscheinlichkeit quasi auf eine Punktmasse, das heißt $\hat{q}_i = 1$. T ist dabei optimiert, was NLL auf dem Validierungssatz angeht. Da der Parameter T das Maximum der Softmax-Funktion nicht ändert, bleibt die Klassifizierungsvorhersage $\hat{y}'_i$ unverändert. Mit anderen Worten hat die Temperaturskalierung somit keinen Einfluss auf die Genauigkeit des Modells.

Die Temperaturskalierung wird häufig in Bereichen wie der so genannten "Knowledge Distillation" (siehe Hinton, Geoffrey, Vinyals, Oriol, and Dean, Jeff. "Distilling the knowledge in a neural network." 2015, dessen Inhalt, insbesondere die Definitionen, hiermit per Referenz inkludiert sind.) und der statistischen Mechanik (vgl. Jaynes, Edwin T. "Information theory and statistical mechanics". In "Physical review", 106(4):620, 1957, dessen Inhalt, insbesondere die Definitionen, hiermit per Referenz inkludiert sind.) verwendet.

Parameter für die optimale Kalibrierung können mittels Optimierung von der so genannten Log-Wahrscheinlichkeit oder direkt durch die erwarteten Kalibrationsfehler eines Satzes von gestörten Trainingsproben bestimmt werden.

Für beide Ansätze ist bei dem erfindungsgemäßen Ausführungsbeispiel ein Mechanismus vorgesehen, der die Erzeugung eines repräsentativen Satzes von gestörten Proben auf der Grundlage der Trainingsdaten bereitstellt. Hierzu kann wie oben beschrieben auf vorteilhafte Weise beispielsweise die Fast Gradient Sign Methode zur Berechnung der kontradiktorischen Proben unterschiedlicher Stärke verwendet werden.

Eine Weiterbildung des Systems S gemäß Ausführungsbeispiel der erfindungsgemäßen Anordnung S, welches zur Lösung des erfindungsgemäßen Problems beiträgt, ist das physikalische Kamerasystem gemäß Ausführungsbeispiel des erfindungsgemäßen Verfahrens auf der Grundlage der Unsicherheit des Modells die Beispiele, die mit hoher Unsicherheit behaftet sind, beispielsweise Rangfolge auf der Grundlage der prädiktiven Entropie über Klassen hinweg auswählt und optional einem Bediener auf dem HMI-System präsentiert, damit der Bediener einen so genannten Grundwahrheitswert liefern, beispielweise ob ein hergestelltes Produkt fehlerhaft ist.

Entropie ist hier und im Rahmen der gesamten Offenbarung dabei als eine in der statistischen Mechanik Größe definiert, die eine weitreichende Eigenschaft eines thermodynamischen Systems beschreibt. Sie quantifiziert die Anzahl Ω der mikroskopischen Konfigurationen (bekannt als Mikrozustände), die mit den makroskopischen Größen übereinstimmen, die das System charakterisieren, wie beispielsweise sein Volumen, Druck und Temperatur.

Unter der Annahme, dass jeder Mikrozustand gleich wahrscheinlich ist, ist die Entropie S der natürliche Logarithmus der Anzahl der Mikrozustände, multipliziert mit der Boltzmann-Konstante kb. Formal (unter der Annahme gleichwahrscheinlicher Mikrozustände) also

$$S = \text{kb} \ln(\Omega)$$

Unter Prädiktiven Entropie wird im Rahmen der gesamten Offenbarung dabei die Entropie S als (Summe der) Vertrauensbewertungen über die Klassen i hinweg verstanden. Also

$$S = \sum_{i=0}^{C} \log(\text{pi})\text{pi}$$

wobei mit

C    := die Anzahl der Klassen ist und mit

$P_i$    := der Vertrauenswert für die Klasse i definiert ist.

Optional kann die so genannte Modellunsicherheit z.B. über Klassenaktivierungskarten visualisiert werden, um die Betreiber bei seinen Kennzeichnungsbemühungen, also die Vergabe der Label, zu unterstützen - beispielsweise kann das Modell nur zwischen einer kleinen Teilmenge von Klassen eine Unsicherheit aufweisen.

Durch das System S, insbesondere durch das mit der Kamera ausgestaltete Feldgerät FG, sendet das Beispiel mit der Grundwahrheit, wie sofern verfügbar vom Operator gekennzeichnet an das Ausbildungs-Subsystem ML oder speichert es lokal auf der SD-Karte, damit es später abgerufen werden kann.

Zusammenfassend erfolgt der beschriebene Ablauf also wie oben zur FIGUR 2 angegeben unterteilt in einen Schulungsteil TRAINING, in dem ein neues Modell mit Beispielen trainiert wird, und einen Betriebsteil BETRIEB, in dem jedes vom Controller generierte Qualitätsprüfereignis zur Ausführung einer auf maschinellem Lernen basierenden Inferenzaufgabe direkt auf dem Gerät unter Verwendung lokal erfasster Bilddaten führt.

Wobei die Interaktion zwischen diesen Teilen derart ist, dass wenn während des Betriebs das Vertrauen in die Inferenzaufgabe, beispielsweise quantifiziert durch die so genannte inverse prädiktive Entropie, unter einem Schwellenwert liegt, die Bilddaten optional einem Bediener der industriellen Anlage vorgelegt werden und um Rückmeldung gebeten wird, beispielsweise um eine eigene Qualitätsbeurteilung vorzunehmen (und damit ein Label zur Verfügung zu stellen, das während des Trainings verwendet wird), oder um zu entscheiden, ob das Beispiel dem Trainingsdatensatz im Trainingssystem ML hinzugefügt werden soll.

Wenn ein Label in diesem Stadium nicht zur Verfügung gestellt wird, kann es alternativ oder ergänzend zu einem späteren Zeitpunkt, beispielsweise bei einer Umschulung des Modells, zum Beispiel von einem Domänenexperten offline zur Verfügung gestellt werden. In einem letzten Schritt wird das Beispiel (optional mit dem Feedback des Bedieners) dem Datensatz DB im Schulungssystem hinzugefügt, der in einem späteren Schulungsschritt verwendet werden kann.

In der nächsten Iteration der Schulung werden dann die neu zum Datensatz DB hinzugefügten Beispiele zunächst von einem Experten beschriftet (falls dies nicht bereits online, d.h. während des Betriebs, erfolgte). Danach wird das Training eines robusten und kalibrierten Modells in der oben beschriebenen Weise, einschließlich der Erzeugung von gestörten Proben, durchgeführt.

Schließlich wird das Modell getestet und validiert und auf die Feldgeräte FG übertragen, damit diese das aktualisierte Modell bei weiteren Qualitätsprüfungsereignissen verwenden können.

Ein Vorteil der Erfindung liegt darin, dass sie ein maschinelles Lernmodell ermöglichen, das integriertes Teil industrieller Systeme ist, in dem es die Bereitstellung eines eingesetzten Modells ermöglicht, das robust genug ist um mit sich entwickelnden Eingaben, Inkonsistenzen und Fehlern während des gesamten Lebenszyklus der Anwendung umgehen zu können.

Ferner stellt die Erfindung eine Überwindung eines typischen Problems bei Lösungen für maschinelles Lernen bereit, welches darin besteht, dass sie dazu neigen, zu zuversichtlich zu sein wenn ihnen zuvor ungesehene Daten (Proben)präsentiert werden, was zu fehlerhaften Ergebnissen führt, die aber mit hohen Vertrauenswerten ausgezeichnet werden, was dazu führen kann, dass diese Fehler und die Fehlklassifikationen unbemerkt bleiben. Hiermit wird auch der Mangel an technischer Robustheit überwunden, die zu Vorhersagen führt, denen ein Operateur nicht unbedingt vertrauen kann.

Damit wird das Risiko des Einsatzes industrieller, auf maschinellem Lernen basierender Lösungen für Qualitätsprüfung oder Fehlererkennung/Vorhersage minimiert, wenn die Anzahl der anfänglich verfügbaren Schulungsbeispiele reduziert ist.

Es reduziert den menschlichen Aufwand, indem die kalibrierte Unsicherheit ausgenutzt wird, da das System aktiv geeignete Beispiele für zukünftige Schulungszyklen vorschlagen kann. Dies erhöht zudem die Effizienz bei der Generierung eines Datensatzes.

Da die erfindungsgemäße Lösung, die kalibrierte Unsicherheit mit aktivem Lernen kombiniert, senkt sie effektiv die Eintrittsbarriere in Bezug auf die Daten, die zur Erstellung von Lösungen benötigt werden. Darüber hinaus verbessert sie die Benutzererfahrung massiv, indem sie intelligente Geräte wie Industriekameras und Controller ermöglicht, die sich ihrer eigenen Grenzen bewusst sind, um den Benutzer aktiv dabei zu unterstützen, sie zu überwinden.

Daher erhöht die Lösung die Kundenakzeptanz für solche auf maschinellem Lernen basierenden Systeme, indem sie den Menschen auf dem Laufenden hält und überwindet somit das Problem, dass es besonders in der Industrie oft Bedenken hinsichtlich vollautomatischer Entscheidungen gibt, die durch Black Boxes (z.B. künstliche neuronale Netze) getroffen werden, da Entscheidungen nicht unbedingt in allen Situationen die das Modell während seines gesamten Lebenszyklus durchläuft, vertraut werden können.

Technische Robustheit im Sinne einer guten Kalibrierung der Vorhersagen während des gesamten Lebenszyklus eines Produkts ist zudem nötig, damit ein KI-System, wie es beispielsweise im Sinne der Definition der Europäischen Kommission verstanden wird, vertrauenswürdig ist. Produkte, die auf der Grundlage des Ausführungsbeispiels der Erfindung entwickelt wurden, entsprechen daher auch mindestens den Richtlinien der Europäischen Kommission.

Die Erfindung ist dabei nicht auf die beschriebenen Ausführungsbeispiele beschränkt, sondern soll vielmehr alle durch die Ansprüche umfassten Varianten enthalten, die eine gut kalibrierte Unsicherheit aufweisen, welche die tatsächliche Vorhersagekraft sowohl für domäneninterne als auch für domänenfremde Stichproben widerspiegelt. Das heißt, Systeme umfasst, die

- in der Lage sind, zu erkennen, wenn sie mit bisher ungesehenen Situationen konfrontiert werden, welche ihre Fähigkeit, gute Diagnosen oder Vorhersagen zu machen, einschränken würde,

- ihre Leistung aktiv verbessern können, indem sie den Anwendern/Bedienern Feedback dazu geben welche Beispiele in den nächsten Ausbildungszyklus aufgenommen werden sollten, um die möglichen Einschränkungen, die erkannt wurden, zu vermeiden

und sich dabei von alternativen auf maschinellem Lernen basierende Lösung unterscheidet, bei denen ein spezifisches Modell trainiert wird, um bekannte/unbekannte Szenarien zu erkennen, wie beispielsweise ein Autoencoder Modell, das in unbeaufsichtigter Weise auf demselben Datensatz trainiert wurde wie der Hauptdatensatz (Das Inspektionsmodell der Qualitätsinspektion), so dass es in gewissem Umfang in der Lage wäre, unbekannte Szenarien zu erkennen, unabhängig von dem Vertrauensniveau dass das Hauptmodell bietet, denn dieser Ansatz hat die Nachteile eines doppelten technischen Aufwands und doppelter physischer Hardware Ressourcen sowie eine geringere Gesamtzuverlässigkeit im Vergleich zu der besprochenen integrierten Lösung gemäß der Erfindung.

**Patentansprüche**

1.   Qualitätsinspektionsverfahren für die Produktion eines Objektes, insbesondere im industriellen Umfeld, bei dem die Produktion des Objektes zumindest auf Grundlage eines mit einem durch zeitlich vorhergehend durchgeführtem maschinellen Training mit einer Unsicherheit vorkalibrierten Modells durchgeführt wird.

2.   Qualitätsinspektionsverfahren nach dem vorhergehenden Anspruch, **dadurch gekennzeichnet, dass** für die Produktion eines Objektes, bei dem

   a. ein, insbesondere industrielles, Feldgerät, wie beispielsweise eine Kamera, derart betrieben wird, dass es mindestens einen auf Grundlage von Algorithmen des maschinellen Lernens durchgeführten Prozess umsetzt,
   b. eine zumindest mit dem Feldgerät derart funktional verbundene Steuereinrichtung betrieben wird, die abhängig von dem Prozess mindestens ein Steuersignal für zumindest eine Steuerung des Feldgeräts und/oder funktional mit ihm verbundenen Systemen erzeugt,
   c. ein zumindest mit dem Feldgerät derart funktional verbundenes System, insbesondere Computersystem, zur Ausführung von einem maschinellen Training betrieben wird, dass erste Daten vom System für den Prozess und/oder zweite Daten des Prozesses für das System übertragbar sind, wobei die ersten Daten aufgrund mindestens einem zeitlich vor erstmaliger Inbetriebnahme des Feldgeräts durchgeführten maschinellen Training derart mit einer Unsicherheit vorkalibriert werden, dass sie hinsichtlich ihres Modells des maschinellen Lernens, zumindest mit generierten gestörten Proben validiert und getestet sind,
   d. die ersten Daten vor erstmaliger Inbetriebnahme an das Feldgerät übertragen werden,
   e. nach erstmaliger Inbetriebnahme je produziertem Objekt ein Zustand eines produzierten Objekts durch die Kamera erfasst wird und bei Auftreten eines Qualitätsereignisses ein Klassifizierungsversuch zur Klassifizierung der Qualität aufgrund des durch die ersten Daten vorkalibrierten Models erfolgt,
   f. bei einem Fehlschlag des Klassifizierungsversuchs die Daten zum aktuellen Objekt als zweite Daten hinterlegt werden,
   g. bei einem Fehlschlag, eine Prozedur zur Abwicklung des Fehlschlags, insbesondere eine Prozedur zur Vergabe einer neuen Klassifikation für den durch die Kamera erfassten Zustand des Objekts durchgeführt wird,

h. bei folgenden Qualitätsereignissen, der Klassifizierungsversuch auf Grundlage der zweiten Daten aktualisierten kalibrierten Models erfolgt.

3. Verfahren nach einem der vorhergehenden Ansprüche,
**dadurch gekennzeichnet, dass** ein Fehlschlag derart ermittelt wird, dass

 a. gemäß Klassifizierungsprozeduren, wie beispielsweise dem so genannten "Predictive Entropy Across Classes", zumindest eine mit der Zuverlässigkeit der Klassifizierung korrelierender Wert ermittelt wird,
 b. bei Unterschreiten des Schwellwerts eine Einstufung als "Fehlschlag" erfolgt.

4. Verfahren nach einem der vorhergehenden Ansprüche
**dadurch gekennzeichnet, dass** das vorkalibrierte Modell und/oder das aktualisierte kalibrierte Modell zumindest teilweise auf Grundlage der so genannten "Platt Scaling" und/oder "Temperature Scaling" erzeugt wird.

5. Verfahren nach einem der vorhergehenden Ansprüche,
**dadurch gekennzeichnet, dass** die Generierung gestörter Proben zumindest teilweise auf Grundlage des so genannten "Fast Gradient Sign Method" durchgeführt wird.

6. Verfahren nach einem der vorhergehenden Ansprüche
**dadurch gekennzeichnet, dass** die Prozedur für die Vergabe einer neuen Klassifikation derart erfolgt, dass

 a. einem Betreiber der Maschine zur Eingabe einer Klassifikation aufgefordert wird,
 b. die Hinterlegung als zweite Daten zumindest auf Grundlage der eingegebenen Klassifikation erfolgt.

7. Verfahren nach einem der vorhergehenden Ansprüche
**dadurch gekennzeichnet, dass** die Prozedur für die Vergabe einer neuen Klassifikation derart erfolgt, dass

 a. eine Verbindung zu einer, insbesondere cloudbasierten, Datenbasis mit dort hinterlegten zweiten Daten, betreibbar ist,
 b. für den erfassten Zustand des Objekts automatisiert nach einem einen übereinstimmenden und/oder zumindest einem ähnlichen erfassten Zustand des Objekts gesucht wird,
 c. der übereinstimmende und/oder mindestens ein Zustand hoher Ähnlichkeit ermittelt wird und eine Festlegung der Klassifikation auf Grundlage der Ermittlung erfolgt.

8. Verfahren nach dem vorhergehenden Anspruch,
**dadurch gekennzeichnet, dass** die Festlegung derart erfolgt, dass

 a. dem Betreiber des Feldgeräts das Ermittlungsergebnis präsentiert wird,
 b. eine Aufforderung zur Bestätigung des übereinstimmenden Ergebnisses und/oder Auswahl eines aus mehreren Zuständen,
 c. die Klassifikation für diesen Zustand vergeben wird.

9. Verfahren nach einem der vorhergehenden Ansprüche,
**dadurch gekennzeichnet, dass** die Festlegung derart erfolgt, dass

 a. automatisiert, insbesondere gestützt durch gemäß maschinellem Lernen trainierten Model für die Festlegung aufgrund einer Auswahl von zweiten Daten, eine Bestätigung des übereinstimmenden Ergebnisses und/oder Auswahl eines aus mehreren Zuständen erfolgt,
 b. die Klassifikation für diesen Zustand vergeben wird.

10. Verfahren nach einem der vorhergehenden Ansprüche,
**dadurch gekennzeichnet, dass** die zweiten Daten für ein aktualisiertes Training des Prozesses auf dem System verwendet werden.

11. Verfahren nach dem vorhergehenden Anspruch,
**dadurch gekennzeichnet, dass** zumindest die ersten Daten des aktualisierten Trainings, insbesondere zumindest als Teil eines aktualisierten kalibrierten Models, an das Feldgeräte übertragen werden.

12. Verfahren nach einem der vorhergehenden Ansprüche,
**dadurch gekennzeichnet, dass** die Übertragung zumindest teilweise durch Anbindung an ein, insbesondere zur Datenübertragung betriebenen Netzwerks durchgeführt wird.

13. Verfahren nach einem der vorhergehenden Ansprüche,
**dadurch gekennzeichnet, dass** die Übertragung zumindest teilweise auf Grundlage von Wechselspeichermitteln, sie SD Karten, USB-Sticks und Vergleichbarem, durchgeführt wird.

**14.** Anordnung für die Qualitätsinspektion für die Produktion eines Objektes, insbesondere im industriellen Umfeld,
**gekennzeichnet durch** Mittel zur Durchführung des Verfahrens nach einem der vorhergehenden Ansprüche.

FIG 1

# FIG 2

**Betrieb**

- BS1 — Triggerung eines Qualitätsereignisses
- BS2 — Führe aktuelles Modell auf dem Gerät aus
- BS3 — Geringe Sicherheit ?
  - Nein → Ende (BS5)
  - Ja → BS4
- BS4 — Bedienerrückmeldung erforderlich und verfügbar ?
  - Nein → BS7
  - Ja → BS6
- BS6 — Visualisierung des Ergebnisses und Rückmeldungserfassung
- BS7 — Füge Beispiel zum Datensatz hinzu → Ende
- BS5 — Ende

**Training**

- TS1 — Label-Vergabe an Beispiele ohne Label
- TS2 — Generierung gestörter Proben
- TS3 — Training des Modells mit erweiteter Datenbank
- TS4 — Modell testen und validieren
- TS5 — Bereitstellug aktuelles Modell im Gerät für den Betrieb

**Europäisches Patentamt**
**European Patent Office**
**Office européen des brevets**

## EUROPÄISCHER RECHERCHENBERICHT

**Nummer der Anmeldung**

EP 20 19 3024

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DAI WENTING ET AL: "Towards Automatic Optical Inspection of Soldering Defects", 2018 INTERNATIONAL CONFERENCE ON CYBERWORLDS (CW), IEEE, 3. Oktober 2018 (2018-10-03), Seiten 375-382, XP033479082, DOI: 10.1109/CW.2018.00074 [gefunden am 2018-12-26] * Seiten 375-379 * ----- | 1-14 | INV. G05B19/418 G06N3/08 |
| X | DE 10 2017 218889 A1 (BOSCH GMBH ROBERT [DE]) 25. April 2019 (2019-04-25) * Absätze [0001], [0040], [0049] * * Absätze [0055], [0063], [0065] * ----- | 1,3,4, 12-14 | |
| T | CHRISTIAN TOMANI ET AL: "Post-hoc Uncertainty Calibration for Domain Drift Scenarios", ARXIV.ORG, CORNELL UNIVERSITY LIBRARY, 201 OLIN LIBRARY CORNELL UNIVERSITY ITHACA, NY 14853, 20. Dezember 2020 (2020-12-20), XP081843059, * das ganze Dokument * ----- | 1-14 | **RECHERCHIERTE SACHGEBIETE (IPC)** G05B G06N |

Der vorliegende Recherchenbericht wurde für alle Patentansprüche erstellt

| Recherchenort | Abschlußdatum der Recherche | Prüfer |
|---|---|---|
| Den Haag | 5. Februar 2021 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 3024

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2021

| Im Recherchenbericht angeführtes Patentdokument | Datum der Veröffentlichung | Mitglied(er) der Patentfamilie | Datum der Veröffentlichung |
|---|---|---|---|
| DE 102017218889 A1 | 25-04-2019 | CN 109697503 A<br>DE 102017218889 A1 | 30-04-2019<br>25-04-2019 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PLATT, JOHN et al.** Probabilistic outputs for support vector machines and comparisons to regularized likelihood methods. *Advances in large margin classifiers,* 1999, vol. 10 (3), 61-74
- **NICULESCU-MIZIL, ALEXANDRU ; CARUANA, RICH.** Predicting good probabilities with supervised learning. *ICML,* 2005, 625-632
- **HINTON, GEOFFREY ; VINYALS, ORIOL ; DEAN, JEFF.** *Distilling the knowledge in a neural network,* 2015
- **JAYNES, EDWIN T.** Information theory and statistical mechanics. *Physical review,* 1957, vol. 106 (4), 620